(19) Europäisches Patentamt
European Patent Office
Office européen des brevets

(11) Publication number: **0 073 042**
**B1**

(12) **EUROPEAN PATENT SPECIFICATION**

(45) Date of publication of patent specification: **07.10.87**

(51) Int. Cl.$^4$: **C 08 L 67/02,** C 08 K 5/09, C 08 K 5/15, C 08 K 3/34, C 08 K 3/38, C 08 K 3/40

(21) Application number: **82107651.0**

(22) Date of filing: **20.08.82**

(54) **Polyester composition.**

(30) Priority: **21.08.81 US 294980**
**25.06.82 US 392221**
**26.07.82 US 401929**

(43) Date of publication of application:
**02.03.83 Bulletin 83/09**

(45) Publication of the grant of the patent:
**07.10.87 Bulletin 87/41**

(84) Designated Contracting States:
**AT BE CH DE FR GB IT LI LU NL SE**

(56) References cited:
**DE-A-1 812 944**
**DE-B-1 954 588**
**FR-A-2 502 162**
**GB-A-2 015 013**
**GB-A-2 033 403**
**US-A-3 632 402**

**Patent Abstracts of Japan, Vol. 2, Nr. 144, 30 November 1978, page 3351C78**

(73) Proprietor: **ETHYL CORPORATION**
**330 South Fourth Street**
**Richmond Virginia (US)**

(72) Inventor: **Jones, Jesse D.**
**3744 Evangeline Street**
**Baton Rouge Louisiana 70815 (US)**
Inventor: **Hornbaker, Edwin D.**
**10968 Worthington Avenue**
**Baton Rouge Louisiana 70815 (US)**
Inventor: **Li, Hsueh M.**
**7209 Sedley Circle**
**Baton Rouge Louisiana 70808 (US)**
Inventor: **Chung, James Y.J.**
**745 Highland Avenue**
**New Martinsville West Virginia 26155 (US)**

(74) Representative: **Sandmair, Kurt, Dr. et al**
**Patentanwälte Schwabe, Sandmair, Marx**
**Stuntzstrasse 16**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 073 042 B1

**Description**

This invention relates to thermoplastic polyester compositions which are especially useful for injection molding operations conducted at relatively low mold temperatures.

It has long been known that polyethylene terepthalate (PET) has superior physical properties, e.g., resistance to chemical attack, and desirable mechanical and electrical properties. Despite these superior physical properties, PET is not always the material of choice for injection molding usage because relatively high mold temperatures, e.g., 120°—140°C, must be utilized to insure good moldability. Any attempt to use a lower mold temperature, e.g., 100°C or lower, results in the injected material being unmoldable as, for one thing, the molded article sticks in the mold and often can only be removed with great difficulty. To circumvent this processing disadvantage, the molder is forced to select more expensive materials such as polybutylene terephthalate (PBT) inasmuch as this poly(alkylene terephthalate) is easily moldable even when using mold temperatures as low as 60°C. By being able to use a lower mold temperature for PBT, the time necessary for cooling the injection molded article to a temperature at which it can be removed from the mold is considerably shorter than the cooling time necessary before the PET article can be removed from an initially hotter mold. Since this shorter cool-down period of PBT results in a shorter process cycle time and a higher rate of article production, economic justification exists for its use despite its higher unit cost.

A welcome contribution to the art would be a PET composiiton which can be injection molded at relatively low mold temperatures (e.g. 100°C, and below) to yield articles exhibiting good moldability characteristics, e.g., good mold releasability and desirable physical properties.

In accordance with this invention there is provided a thermoplastic composition which is injection moldable comprising an intimate mixture of:

(a) a polyethylene terephthalate, and

(b) an epoxidized plasticizer having an oxirane oxygen content within the range of 0.5 and 12.0 percent weight selected from;

(i) a hydrocarbyl ester of a mono epoxidized alkenoic acid having from 12 to 50 carbon atoms,
(ii) an epoxidized unsaturated triglyceride containing at least one epoxide group, and
(iii) an epoxy ester mixture having at least one monoepoxy aliphatic monocarboxylic acid ester and at least one diepoxy aliphatic monocarboxylic acid ester having from 7 to 50 carbon atoms in each ester molecule; and

(c) a nucleating agent cooperative with the epoxidized plasticizer of (b) to increase the releasability of articles molded from said composition over the releasability of articles molded from a composition comprising only (a) and (b) or (a) and (c) when using mold temperatures of at least as low as 93°C which nucleating agent is selected from the group consisting of metal salts of carboxylic acids sodium carbonate, talc, mica, p-hydroxybenzoid acid, sodium benzoate, boron nitride.

Because of this cooperation between the components (b) and (c) above, the compositions may be molded at relatively low mold temperatures (e.g. 50°C to 100°C) without excessive sticking being encountered.

It will be understood, of course, that if desired the composition of this invention may be injected molded at even higher mold temperatures (e.g., about 100 to about 150°C).

A further aspect of this invention is that the composition may additionally contain reinforcing amounts of a reinforcing filler, e.g., glass fibers either alone or in combination with particulate mineral fillers. Other additives may also be used in the composition such as flame retardants and impact modifiers.

The polyethylene terephthalate used herein is preferably homopolymeric PET although crystallizable PET copolymers may also be used. Exemplary of useful PET copolymers are those copolymers in which the copolymer contains at least 80 mol percent of repeating units derived from terephthalic acid and ethylene glycol with the remainder (20 mol percent or less) being derived from other well known acid and/or glycol components. Representative acid components are phthalic acid, isophthalic acid, naphthalene 1,4- or 2,6-dicarboxylic acid, diphenyl-4,4′-dicarboxylic acid, diphenyl ether-4,4′-dicarboxylic acid, adipic acid, sebacic acid as well as their halogenated (preferably brominated) counterparts. The glycol components may be diethylene glycol, neopentyl glycol, cyclohexanedimethanol, 2,2-bis(4-hydroxyphenyl)propane, 1,3-propanediol, 1,4-butanediol, dibromoneopentyl glycol, the bis(2-hydroxyethyl)ether of tetrabromobisphenol A, or tetrabromo-*p*-xylylene glycol.

The polyethylene terephthalates used herein can be virgin PET or reclaimed PET. Also the PET used in the compositions of this invention should be injection moldable and thus generally can have an intrinsic viscosity (I.V.) as low as 0.3 and preferably between 0.4 and 1.2, more preferably between 0.5 and 1.0, as measured at 25°C in a solvent consisting of 60 percent by weight phenol and 40 percent by weight of tetrachloroethane. For most injection molding applications polyethylene terephthalates in which the I.V. is in the range of 0.4 to 0.9 are most preferred.

The compositions of this invention preferably have an amount of the herein described epoxidized plasticizer (also sometimes referred to in the art as an "epoxy plasticizer") within the range of from 0.5 to 12 parts per hundred parts of PET (i.e., from 0.5 to 12 phr) and an amount of adjuvant within the range of from

0.05 to 5 parts per hundred parts of PET, (i.e., from 0.05 to 5 phr). Most preferably, the amounts used for the two components of the composition fall within the range of from 2 to 8 parts of epoxidized plasticizer and from 0.1 to 3 parts of adjuvant per hundred parts of PET.

The epoxidized plasticizer described herein should have an oxirane oxygen content of 0.5% to about 12.0% by weight. Preferably, the oxirane oxygen content is in the range of from 3.0% to 10.0%.

The epoxidized plasticizers may be prepared by techniques well known in the art by epoxidation, esterification and ester interchange. Typical techniques used in epoxidation, esterification and ester interchange reactions may be found for example in the chapters on "Epoxidation", "Esterification" and "Ester Interchange" in Kirk-Othmer, *Encyclopedia of Chemical Technology* (second ed. 1965), vol. 8, pp. 238 et seq, pp. 313 et seq, and pp. 356 et seq, respectively.

The "epoxy plasticizers" used pursuant to this invention represent epoxy oils and esters of the type used as plasticizer stabilizers for poly(vinyl chloride) resins. The types of epoxy plasticizers which may be employed in the practice of the invention are the following:

(a) a hydrocarbyl ester of a mono epoxidized alkenoic acid, said ester being characterized by containing from 12 to 50 carbon atoms (preferably from 16 to 36 carbon atoms) in the molecule;

(b) an epoxidized unsaturated triglyceride containing at least one epoxide group; and

(c) an epoxy ester mixture comprising at least one monoepoxy aliphatic monocarboxylic acid ester and at least one diepoxy aliphatic monocarboxylic acid ester in which each of the epoxy esters contains from 7 to 50 carbon atoms in the molecule.

Of the epoxy plasticizers of category (a) above, those having from 16 to 36 carbon atoms in the molecule are preferred for use in the compositions of this invention.

The alkenoic acids from which the category (a) epoxidized esters of this invention are derived are those having from 7 to 36 carbon atoms and having the general formula:

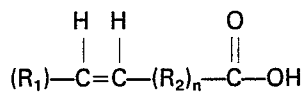

wherein

$R_1$ is hydrogen or an alkyl radical,
$R_2$ is an alkylene radical, and
n is either 0 or 1.

Exemplary of such mono unsaturated acids are dec-9-enoic acid, dodec-9-enoic acid, palmitoleic acid, oleic acid, petroselenic acid, vaccenic acid, gadoleic acid, 5-eicosenic acid, 5-docosenic acid, cetoleic acid, erucic acid, nervonic acid, 4-heptenoic acid, 3-methyl-7-octenoic acid, 4-methyl-3-hexenoic acid, 5-methyl-4-hexenoic acid, 3-ethyl-3-pentenoic acid, and 2-octenoic acid. Preferably, the alkenoic acid will have from about 14 to about 24 carbon atoms. Most preferred are the alkenoic acids, e.g., oleic acid, in which the single double bond is internally located, i.e., the double bond is at a non-terminal carbon atom.

The epoxidized alkenoic esters of category (a) may be alkyl, aryl, aralkyl, or cycloalkyl esters of mixtures thereof, with alkyl esters, in which the alkyl group has from 7 to 36 carbon atoms, being preferred. The most highly preferred alkyl esters are those in which the alkyl group contains from 7 to 12 carbon atoms. For example, the alkyl ester can be one in which the alkyl radical forming the alkyl group is methyl, ethyl, propyl, isopropyl, butyl, isobutyl, *sec*-butyl, *t*-butyl, pentyl, hexyl, octyl, decyl, dodecyl, 4-methyloctyl, 2-butyl-2-methylhexyl, eicosyl and the like. A most useful ester of this invention is one in which the alkyl group contains 8 carbon atoms, e.g., octyl mono epoxidized monobasic alkenoic acid.

Exemplary of the aryl esters are those in which the aryl radical is: phenyl; lower alkyl substituted phenyls, e.g., tolyl (*o*-, *m*- or *p*-isomers), ethylphenyl (*o*-, *m*-, or *p*-isomers); dimethylphenyl (various isomers such as 2,4-; 2,5-; 3,4- etc. isomers); halogen substituted phenyl, e.g., chlorophenyl and bromophenyl; naphthyl; and alkyl or halogen substituted naphthyl such as 2-methyl-5-ethylnaphthyl, 2-propyl-4-methyl-6-chloronaphthyl, and 7-chloronaphthyl.

Production of the esters of this invention can be effected by esterification of the selected alkenoic acid followed by epoxidation of the resultant ester.

Epoxidized octyl oleate (which is also referred to as octyl epoxy stearate) having a 3.6% by weight minium oxirane oxygen content can be purchased under the designation Drapex 3.2 from Argus Chemical Corporation, Brooklyn, New York 11231.

The epoxidized unsaturated triglycerides of category (b) above are triglycerides of aliphatic monocarboxylic acid(s) in which each of the acid constituents usually contain from about 6 up to about 30 carbon atoms in which at least one acid constituent is epoxidized. It will be understood that an acid constituent may have more than one epoxide group and that more than one acid constituent may be epoxidized. Examples of aliphatic monocarboxylic acids which may be present in the triglyceride ester include, but are not limited to, the following: oleic acid, linoleic acid, linolenic acid, stearic acid, palmitic acid, myristic acid, lauric acid, eleostearic acid, licanic acid, ricinoleic acid, palmitoleic acid, petroselenic acid, vaccenic acid, erucic acid, arachidic acid, tetracosanoic acid, capric acid, and caproic acid. It will be

understood of course that prior to epoxidation at least one of the acid groups. will contain olefinic unsaturation serving as the site(s) of epoxidation.

The epoxidized unsaturated triglycerides of category (b) may be individual compounds or mixtures thereof. The mixtures of epoxidized unsaturated triglycerides should have an oxirane oxygen content falling in the range of 0.5% to 12.0% by weight. Preferably, the oxirane oxygen content is in the range of from about 3.0% to about 10.0%. Most preferably, the oxirane oxygen content is from 7.0% to 9.5%. The foregoing oxirane oxygen contents also apply to the individual compounds of category (b) when they are used as individual compounds rather than as mixtures.

Examples of unsaturated triglycerides of category (b) which may be epoxidized include, but are not limited to, the following: linseed oil, soybean oil, sunflower seed oil, safflower oil, hempseed oil, tung oil, oiticica oil, corn oil, sesame oil, cottonseed oil, castor oil, olive oil, peanut oil, rapeseed oil, coconut oil, babassu oil, and palm oil.

Compounding and processing conditions make it preferable to use epoxidized unsaturated triglycerides which are relatively non-volatile and easy to mix and to select those which have a molecular weight which is sufficiently high to provide these characteristics, for example, a molecular weight of at least 400. Economic considerations make it convenient to use epoxidized unsaturated triglycerides with a molecular weight of 400 to 1000. However, it is deemed feasible to use higher molecular weight epoxidized unsaturated triglycerides—i.e., those having molecular weights greater than 1000.

Epoxidized unsaturated triglycerides obtained by epoxidation of vegetable fats and oils are especially preferred. Most preferred are epoxidized soybean oil and epoxidized linseed oil.

Epoxidized unsaturated triglycerides of category (b) can be made by techniques well known to those having ordinary skill in the art. Such suitable compounds may be made by epoxidizing unsaturated triglycerides including, but not limited to, linseed oil and soybean oil. The epoxidized compounds may be produced by introducing the epoxide linkage by treating the olefinic bonds with an epoxidizing agent, such as a peracid, e.g., peracetic acid, by well known techniques.

Epoxidized soybean oil having a 7.0% by weight minimum oxirane oxygen content can be purchased under the designation Drapex 6.8 and epoxidized linseed oil having a 9.3% by weight minimum oxirane oxygen content can be purchased under the designation Drapex 10.4 from Argus Chemical Corporation, Brooklyn, New York 11231.

Epoxy ester mixtures of category (c) above comprising at least one monoepoxy aliphatic monocarboxylic acid ester and at least one diepoxy aliphatic monocarboxylic acid ester in which each of the epoxy esters contains from 7 to 50 carbon atoms in the molecule represent still another type of epoxidized plasticizer used pursuant to this invention.

By techniques well known in the art these epoxy ester mixtures can be derived from at least one alcohol having from one to 20 carbon atoms and from at least two different aliphatic monocarboxylic acids having from 6 to 30 carbon atoms or from at least two different alcohols having from one to 20 carbon atoms and from at least one aliphatic monocarboxylic acid having from 6 to 30 carbon atoms such that the epoxy ester mixture comprises at least one monoepoxy aliphatic monocarboxylic acid ester and at least one diepoxy aliphatic monocarboxylic acid ester in which each of the epoxy esters contains from 7 to 50 carbon atoms in the molecule. The epoxy ester mixture of category (c) can also be derived from vegetable fats or vegetable oils, the fatty acid fraction of tall oil and other aliphatic monocarboxylic acid esters (by ester interchange with one or more alcohols containing from one to about 20 carbon atoms). It is also deemed feasible to derive the epoxy ester mixture from nonfractionated tall oil—i.e., tall oil that contains its resin acid (rosin or rosin acid) and fatty acid fractions.

The alcohols of the category (c) epoxy ester mixtures may have from one to 20 carbon atoms and can be aliphatic, cyclic and aromatic. Exemplary of such alcohols are alkyl, alkenyl, aryl, cycloalkyl, aralkyl alcohols and the like. Examples include, but are not limited to, the following: methanol, ethanol, propanol, butanol, pentanol, hexanol, heptanol, octanol, nonanol, decanol, undecanol, dodecanol, tridecanol, tetradecanol, pentadecanol, hexadecanol, heptadecanol, octadecanol, nonadecanol, 2-propene-1-ol (allyl alcohol), 2-buten-1-ol (crotyl alcohol), 1-penten-3-ol, *trans*-2-hexen-1-ol, 9-decen-1-ol, 10-undecen-1-ol (-undecylenyl alcohol), *cis*-9-ocatdecen-1-ol (oleyl alcohol), cyclobutanol, cyclopentanol, cyclohexanol, cycloheptanol, cyclooctanol, cyclododecanol, cyclopropylmethylcarbinol, cyclopropylmethanol, cyclopentylpropanol, 1-cyclopentylethanol, cyclopentyl-methanol, 4-cyclohexyl-1-butanol (cyclohexylbutanol), cyclohexylmethanol, cyclooctylmethanol, cycloundecylmethanol, phenol, naphthol, anthranol, benzyl alcohol, methylphenyl-carbinol and dimethylphenylethylcarbinol (benzyl-*tert*-butanol).

The aliphatic monocarboxylic acids of the category (c) ester mixtures may have from 6 to 30 carbon atoms. Examples include, but are not limited to, the following: oleic acid, linoleic acid, linolenic acid, stearic acid, palmitic acid, myristic acid, lauric acid, eleostearic acid, licanic acid, ricinoleic acid, palmitoleic acid, petroselenic acid, vaccenic acid, erucic acid, arachidic acid, tetracosanoic acid, capric acid, caproic acid and the like.

It will be understood of course that there will be sufficient olefinic unsaturation either in the alcohol portion or the acid portion so that epoxidation yields the monoepoxy and diepoxy compounds contained in the epoxy ester mixture of category (c).

Thus, for example, it is possible to prepare the following epoxy esters and to mix them to produce epoxy ester mixtures containing at least one monoepoxy aliphatic monocarboxylic acid ester and at least

one diepoxy aliphatic monocarboxylic acid ester: epoxidized octyl oleate, epoxidized octyl linoleate, epoxidized octyl linolenate, epoxidized octyl eleostearate, epoxidized octyl licanate, epoxidized octyl ricinoleate, epoxidized octyl palmitoleate, epoxidized octyl petroselenate, epoxidized octyl vaccenate, epoxidized octyl erucate, as well as the epoxidized methyl, ethyl, propyl, butyl, pentyl, hexyl, heptyl, nonyl, decyl, dodecyl, hexadecyl, octadecyl, allyl, crotyl, oleyl, cyclobutyl, cyclooctyl, naphthyl, anthryl or benzyl esters thereof and the like; and glycidyl stearate, glycidyl palmitate, glycidyl myristate, glycidyl laurate, glycidyl arachidate, glycidyl tetracosanate, glycidyl caprate, glycidyl caproate, as well as the epoxidized crotyl and oleyl esters thereof.

Examples of vegetable fats and vegetable oils from which the epoxy ester mixture of category (c) may be derived include, but are not limited to, the following: coconut oil, babassu oil, palm oil, castor oil, olive oil, peanut oil, rapeseed oil, corn oil, sesame oil, cottonseed oil, soybean oil, sunflower seed oil, safflower oil, hempseed oil, linseed oil, tung oil and oiticica oil.

Thus, for example, it is possible to prepare the methyl, ethyl, propyl, butyl, pentyl, benzyl, heptyl, octyl, nonyl, decyl, dodecyl, hexadecyl, octadecyl, allyl, crotyl, oleyl, cyclobutyl, cyclooctyl, naphthyl, anthryl or benzyl epoxy esters of coconut oil, babassu oil, palm oil, castor oil, olive oil, peanut oil, rapeseed oil, corn oil, sesame oil, cottonseed oil, soybean oil, sunflower seed oil, safflower oil, hempseed oil, linseed oil, tung oil, or oiticica oil.

Mixtures comprising monoepoxy aliphatic monocarboxylic acid esters and diepoxy aliphatic monocarboxylic acid esters (category (c) above) are available commercially. For example, epoxidized esters of soybean oil and linseed oil are available from Viking Chemical Company, 838 Baker Building, Minneapolis, Minnesota 55402, under the product designation Vikoflex. Such epoxidized esters are: methyl epoxy soyate (Vikoflex 7010), ethyl epoxy soyate (Vikoflex 7020), propyl epoxy soyate (Vikoflex 7030), butyl epoxy soyate (Vikoflex 7040), hexyl epoxy soyate (Vikoflex 7060), octyl epoxy soyate (Vikoflex 7080), methyl epoxy linseedate (Vikoflex 9010), ethyl epoxy linseedate (Vikoflex 9020), propyl epoxy linseedate (Vikoflex 9030), butyl epoxy linseedate (Vikoflex 9040), hexyl epoxy linseedate (Vikoflex 9060) and octyl epoxy linseedate (Vikoflex 9080).

An epoxy ester mixture of the fatty acid fraction of tall oil having a 5.0% by weight minimum oxirane oxygen content is commercially available from Argus Chemical Corporation, 633 Court Street, Brooklyn, N.Y. 11231 under the product designation Drapex 4.4, which is octyl epoxy tallate.

To date, tests with certain epoxidized plasticizers and a cooperative adjuvant in the compositions of this invention demonstrate that the adjuvant is synergistic. Thus, without the use of a synergistic adjuvant in conjunction with any of the above described hydrocarbyl esters of mono epoxidized alkenoic acids (category (a) above) there is no observed significant enhancement of PET moldability. Further, the use of the epoxidized unsaturated triglyceride (category (b) above), such as epoxidized soybean oil or epoxidized linseed oil, in combination with a synergistic adjuvant, such as sodium stearate, gives a significant enhancement of PET moldability. Likewise, the use of any of the hereinafter described synergistic adjuvants without these epoxidized plasticizers is without observable effect. In view of the ineffectiveness of these epoxidized plasticizers and adjuvants when used alone, it is surprising that their use in combination gives the very noticeable moldability enhancement.

Use of a cooperative adjuvant in conjunction with the above described epoxy ester mixture (category (c) above) gives very noticeable moldability enhancement over compositions without the epoxy ester mixture.

Synergistic effect is noted for example by the use, as the adjuvant, of alkali metal salts of substantially saturated aliphatic monocarboxylic acids, such as sodium acetate, potassium acetate, sodium propionate, potassium propionate, sodium hexanoate, sodium octanoate, sodium decanoate, sodium laurate, potassium laurate, sodium tetradecanoate, sodium hexadecanoate, and sodium stearate; and of alkali metal salts of unsaturated aliphatic monocarboxylic acids, such as sodium acrylate, and potassium methacrylate. Also commercially available soaps, such as Ivory Soap and Ivory Snow (which are manufactured by The Proctor and Gamble Company of Cincinnati, Ohio, and Ivory Snow is believed to comprise about 85% by weight sodium salts of tallow fatty acids and about 15% by weight sodium salts of coconut fatty acids and Ivory Soap is believed to comprise about 50% by weight sodium salts of tallow fatty acids and about 50% by weight sodium salts of coconut fatty acids) are useful as synergistic adjuvants. The lithium, cesium and rubidium salts, while not as available and economical, should provide the synergistic effect sought. Of the foregoing salts, sodium stearate is most preferred.

Other effective synergistic adjuvants include sodium carbonate, talc, mica, boron nitride, Surlyn 1605 (an ionomer resin containing sodium ions and manufactured by E. I. du Pont de Nemours and Company), *p*-hydroxybenzoic acid, sodium benzoate and zinc stearate.

Without desiring to be bound by theoretical considerations, it is believed that materials which, pursuant to this invention, serve as adjuvants tend to be substances which are also effective nucleating agents. In accordance with this theory, it is contemplated that other substances which will prove to be effective adjuvants for use in this invention include metal salts of carboxylic acids such as zinc lead, calcium, barium and cupric laurates and stearates, potassium benzoate and sodium and potassium salts of organic polymers containing pendant carboxyl groups such as copolymers of olefins and acrylic or methacrylic acids and copolymers of aromatic olefins and maleic anhydride. Note in this connection French

2,129,162; British 2,015,013; and *The British Polymer Journal*, Volume 11, pages 146—150 (September 1979).

To insure even dispersion of the epoxidized plasticizer and the adjuvant in the PET, it is preferred that the adjuvant and the epoxidized plasticizer, when it exists as a solid, be of a particle size so that at least 30% will pass through a sieve having a wire mesh of 0,06 mm.

Highly preferred epoxidized plasticizer-adjuvant combinations are: the ester-adjuvant combination of epoxidized octyl oleate and sodium stearate; the epoxidized unsaturated triglyceride-adjuvant combinations of epoxidized soybean oil and sodium stearate and epoxidized linseed oil and sodium stearate; and the epoxy ester mixture-adjuvant combinations of the epoxy esters of soybean oil, of linseed oil or of the fatty acid fraction of tall oil and sodium stearate, combinations of octyl epoxy soyate (e.g. Vikoflex 7080), octyl epoxy linseedate (e.g., Vikoflex 9080) or octyl epoxy tallate (e.g. Drapex 4.4) and sodium stearate are more preferred.

To improve the injection moldability of polyethylene terephthalates any standard commercial grade or any heat stable grade of sodium stearate is utilizable in the compositions of this invention provided that the sodium stearate utilized is of a particle size so that at least 30% will pass through a 0.06 mm wire mesh sieve. For example, such sodium stearate can be purchased as "Sodium Stearate T-1" or "Sodium Stearate, Heat-Stable" from Witco Chemical Corporation, Organic Division, New York, New York 10017.

As mentioned previously, other additives may also be utilized in the composition of this invention. For example, it is most useful if the composition additionally contains a reinforcing filler. This filler, depending on its nature, can increase the strength and impact qualities of the PET composition. In fact, the use of a reinforcing filler is often required by most present day commercial usage of injection molded PET. In general, any reinforcement can be used, e.g., fibers, whiskers, or platelets of metals, e.g., aluminum, iron or nickel, and the like, and non-metals, e.g., ceramics, carbon filaments, silicates, asbestos, titanate whiskers, quartz, glass flakes and fibers, and the like. Although it is only necessary to have at least a reinforcing amount of the reinforcing filler present, in general, the filler will comprise from 10 to 160 parts per hundred of the unreinforced polyethylene terephthalate resin. Amounts of filler, especially glass fibers, in the range of from 30 to 140 parts per hundred of the unreinforced PET are preferred as such compositions have particularly desirable properties. From the standpoint of ease of injection molding usage, reinforced compositions of this invention, especially those using glass fibers, preferably contain a filler constituent in an amount within the range of from 30 to 90 parts per hundred parts by weight of the unreinforced polyethylene terephthalate resin.

Of the various fillers that may be used in the compositions of this invention, the preferred reinforcing fillers are glass. It is most preferred to use fibrous glass filaments of lime-aluminum borosilicate glass that are relatively soda free. This is known as "E" glass. The length of the glass filaments and whether they are bundled into fibers and the fibers bundled in turn to roving, etc., is not critical to this invention. However, it has been found convenient, to use glass strands of at least about 3.175 mm in length. It is to be understood that during compounding considerable fragmentation of the strands will occur and that even further reduction of length occurs in the final injection molded article.

Other additives may also be utilized in the composition of this invention to achieve certain desirable characteristics in the final injection molded product. For example, flame retardants, impact modifiers, antioxidants, ultraviolet ray absorbents, lubricants, antistatic agents, colorizing agents (e.g., zinc sulfide), antifungal agents, foaming agents, etc., depending upon the ultimate use of the article injection molded.

The compositions of this invention can be prepared by blending the various components in a blender, e.g., a tumble blender or a Henschel mixer, compounding the mixture in an extruder, e.g., a twin-screw 28 mm Werner-Pfleiderer extruder and thereafter chopping the extrudate into pellets. The resultant product is suitable for use in injection molding operations. It is noteworthy that the compositions of this invention can be satisfactorily injection molded at mold temperatures less than 100°C with an acceptably short cycle time and with the molded article exhibiting physical properties which are commercially attractive or at least have commercial potential.

The present invention is further illustrated in the following examples, which are not to be construed as limiting.

Examples 1—29

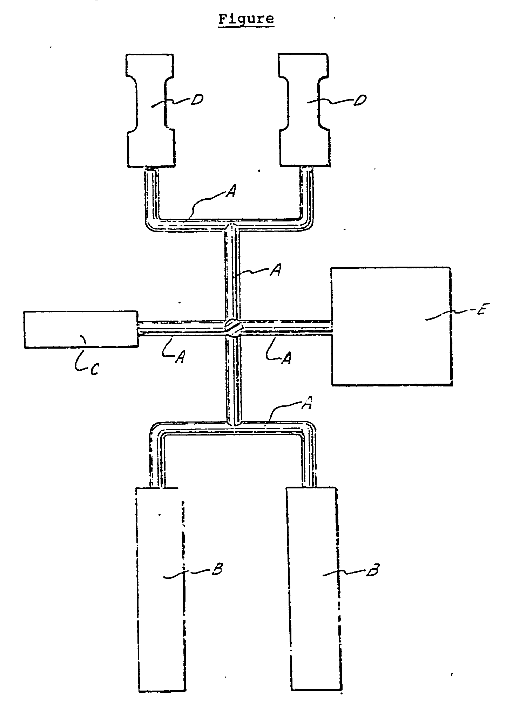

The various PET compositions of Examples 1—29 were prepared by mixing the components to form a premix compounding the premix in a single screw extruder at temperatures of about 500°F (260°C), and molding the pellets into an article on a reciprocating screw injection molding machine. The injection mold was suitably shaped and dimensioned for providing an article having the configuration shown in the Figure—which is a top plan view of the article. The mold utilized was a center gated mold having a nonmovable planar sprue side and a movable cavity side. As can be seen in the Figure the article formed by the mold has a plurality of runners, labeled "A", which terminate into various test pieces. Emanating from the center of the runner grid is a conventional tapered sprue. Two of the test pieces are rectangular bars and are labelled with the letter "B". These "B" bars are about 152.4 mm long, 12.7 mm wide and 6.35 mm thick. The test piece labelled "C" in the Figure is a rectangular bar which is 63.5 mm long, 12.7 mm wide and 3.175 mm thick. The two "dog bone" shaped test pieces are labelled "D" and are used for the testing of tensile properties. They measure about 165.1 mm long, 3.175 mm thick and 19.05 mm in width at each of

their ends and 12.7 mm in width at their middles. The test piece labelled "E" is 101.6 mm long, 69.85 mm wide and 3.175 mm thick. The runners and sprue are approximately 9.525 mm in cross sectional width. This configuration for the test article was chosen for its complexity and for its yield of test specimens which are used in accordance with well recognized standard tests. The complexity of the article configuration was also thought sufficient to give a good prediction of moldability performance of the composition when used to form typical commercial articles.

The PET, epoxidized plasticizer, glass and sodium stearate used in the Examples are identified as follows:

Polyethylene Terephthalate (PET):
from Goodyear Tire and Rubber Company; Vituf 5900—crystalline PET having an intrinsic viscosity of 0.59 measured at 25°C in solvent consisting of 60 percent by weight phenol and 40 percent by weight of tetrachloroethane;

Epoxidized Octyl Oleate (Octyl Epoxy Stearate):
from Argus Chemical Corp. under the designation Drapex 3.2;

Glass Fiber Strands:
from Owens-Corning Fiberglas, Corp., designated Owens-Corning Fiberglas 419AA (4.7625 mm chopped strands) or PPG Industries, Inc., PPG 3540 Fiberglass (3.175 mm chopped strands); and

Sodium Stearate:
such as that available from Witco Chemical Company.

Tables I, II, and III (Examples 1—8, 9—16 and 17—24, respectively) report the observations noted of the moldability of various compositions of this invention. The observation of compositions not utilizing the combination of epoxidized plasticizer and adjuvants of this invention are shown in Table IV (Comparative Examples 25—29. Where moldability is shown as "Excellent", the molded article freely fell from the mold upon mold opening. A rating of "Good" indicates that a majority of the molded articles fell freely from the cavity side of the mold. When less than a majority, but still a substantial number of articles fell freely, a rating of "Fair" was given. The "Poor" rating indicates that most of the injection molded articles had to be pulled from the cavity side of the mold but that no sticking to the sprue side of the mold was observed or that, even though the main portion of the article did not stick to the sprue side of the mold, the sprue portion of molded article stuck on the sprue side. A rating of "Non-Moldable" indicates that the article stuck to the sprue side of the mold and that the molding cycle had to be stopped so that the molded article could be removed from the mold by chiseling, prying, etc.

In all the Examples the mold temperature was kept around 200°F (93°C).

TABLE I
Compositions of this invention and their moldability

| | Examples | | | | | | | |
|---|---|---|---|---|---|---|---|---|
| | 1 | 2 | 3 | 4 | 5 | 6 | 7 | 8 |
| Composition<br>PET Resin, parts | 100 | 100 | 100 | 100 | 100 | 100 | 100 | 100 |
| Glass fiber, phr* | 43 | 43 | 43 | 43 | 43 | 43 | 43 | 43 |
| Octyl Epoxy Stearate, phr* | 3.0 | 3.0 | 3.0 | 3.0 | 3.0 | 3.0 | 3.0 | 3.0 |
| Sodium Stearate, phr* | 0.5 | — | — | — | — | — | — | 0.3 |
| Sodium Carbonate, phr* | — | 0.5 | — | — | — | — | — | — |
| Sodium Acetate, phr* | — | — | 0.5 | — | — | — | — | — |
| Sodium Propionate, phr* | — | — | — | 0.5 | — | — | — | — |
| Sodium Acrylate, phr* | — | — | — | — | 0.5 | — | — | — |
| Sodium Methacrylate, phr* | — | — | — | — | — | 0.5 | — | — |
| Ivory Snow[a], phr* | — | — | — | — | — | — | 0.5 | — |
| Talc, phr* | — | — | — | — | — | — | — | 1.0 |
| Moldability | Excellent | Excellent | Excellent | Good | Fair | Poor | Excellent | Excellent |

* Parts per 100 parts PET
[a] Believed to be about 85% by weight sodium salts of tallow fatty acids and about 15% by weight sodium salts of coconut fatty acids.

TABLE II
Compositions of this invention and their moldability

| | Examples | | | | | | | |
|---|---|---|---|---|---|---|---|---|
| | 9 | 10 | 11 | 12 | 13 | 14 | 15 | 16 |
| Composition | | | | | | | | |
| PET Resin, parts | 100 | 100 | 100 | 100 | 100 | 100 | 100 | 100 |
| Glass Fiber, phr* | 43 | 43 | — | — | 43 | 43 | 43 | 43 |
| Octyl Epoxy Stearate, phr* | 3.0 | 7.2 | 3.0 | 3.0 | 3.0 | 3.0 | 3.0 | 3.0 |
| Sodium Stearate, phr* | 0.5 | — | 0.5 | 0.5 | — | — | — | — |
| Boron Nitride, phr* | — | — | — | — | 0.5 | — | — | — |
| Surlyn 1605, phr* | — | — | — | — | — | 0.5 | — | — |
| *p*-Hydroxybenzoic Acid, phr* | — | — | — | — | — | — | 0.5 | — |
| Sodium Benzoate, phr* | — | — | — | — | — | — | — | 0.5 |
| Titanium Dioxide, phr* | 1.0 | — | — | 0.3 | — | — | — | — |
| Talc, phr* | — | 1.4 | — | — | — | — | — | — |
| Moldability | Excellent | Excellent | Excellent | Excellent | Excellent | Excellent | Excellent | Excellent |

* Parts per 100 parts PET

TABLE III
Compositions of this invention and their moldability

| | Examples | | | | | | | |
|---|---|---|---|---|---|---|---|---|
| | 17 | 18 | 19 | 20 | 21 | 22 | 23 | 24 |
| Composition | | | | | | | | |
| PET Resin, parts | 100 | 100 | 100 | 100 | 100 | 100 | 100 | 100 |
| Glass Fiber, phr* | 43 | 43 | 21 | 43 | 43 | 43 | 43 | 43 |
| Octyl Epoxy Stearate, phr* | 3.0 | 3.0 | 3.0 | 3.0 | 3.0 | 3.0 | 5.7 | 5.7 |
| Zinc Stearate, phr* | 0.5 | — | — | — | — | — | — | — |
| Sodium Stearate, phr* | — | 0.5 | 0.5 | 0.5 | 0.5 | 0.5 | 0.7 | 0.7 |
| Zinc Sulfide, phr* (Colorant) | — | 2.0 | 2.0 | 2.0 | 2.0 | — | — | — |
| Titanium Dioxide, phr* (Colorant) | — | — | — | — | — | — | — | 0.7 |
| Moldability | Excellent | Excellent | Poor** | Excellent | Excellent | Excellent | Excellent | Excellent |

* Parts per 100 parts PET
** Variant rating of poor believed to be the result of compounding errors.

TABLE IV
Compositions not of this invention and their moldability

| | Comparative Examples | | | | |
|---|---|---|---|---|---|
| | 25 | 26 | 27 | 28 | 29 |
| Composition | | | | | |
| PET Resin, parts | 100 | 100 | 100 | 100 | 100 |
| Glass Fiber, phr* | — | — | 43 | 43 | 43 |
| Octyl Epoxy Stearate, phr* | — | — | — | — | 3.0 |
| Sodium Stearate, phr* | — | — | — | 0.5 | — |
| $TiO_2$, phr* | — | 0.3 | — | — | — |
| Moldability | Non-moldable | Non-moldable | Non-moldable | Non-moldable | Non-moldable |

* Parts per 100 parts PET

As can be seen from Table IV the absence of either the epoxidized plasticizer or the synergistic adjuvant results in a non-moldable composition under the same molding compositions.

Comparable results were obtained with compositions corresponding to Examples 18—21 except that the PET utilized was American Enka's T-0740.

The data shown in Table V illustrate the good balance of physical properties exhibited by articles injection molded from compositions of this invention at mold temperatures of about 93°C. The test specimens were subjected to the following ASTM procedures:

Specific gravity—D 792-66 (1975);
Tensile-yield, elongation and tensile elastic modulus—D 638-77a;
Flexural strength and flexural elastic modulus—790-71 (1978);
Izod impact for 6.35 mm bar at 23°C—D 256-78;
Heat deflection temperature—D 648-72 (1978);
Vicat softening point—D 1525-76; and
Rockwell hardness—D 785-65 (1976).

TABLE V
Compositions of this invention and their physical properties

| | Examples | | | |
|---|---|---|---|---|
| | 18 | 19 | 20 | 21 |
| Composition | | | | |
| PET Resin (Vituf 5900)—parts | 100 | 100 | 100 | 100 |
| Glass Fiber, phr* | 43 | 43 | 43 | 43 |
| Octyl Epoxy Stearate, phr* | 3 | 3 | 3 | 3 |
| Sodium Stearate, phr* | 0.3 | 0.5 | 0.7 | 0.1 |
| Properties | | | | |
| Tensile Yield bar | 1305.8 | 1019.0 | 1108.0 | 1385.8 |
| Tensile Elastic Modulus, kbar | 89.63 | 90.32 | 96.53 | 85.49 |
| Elongation, % | <10 | <10 | <10 | <10 |
| Flexural strength, bar | 2103.6 | 2057.4 | 2036.0 | 2199.4 |
| Flexural Elastic Modulus, kbar | 94.46 | 90.32 | 96.53 | 93.77 |
| Izod Impact, 6.35 mm bar, $J/cm^2$ | 0.336 | 0.336 | 0.315 | 0.357 |
| Izod Impact, 3.175 mm bar, $J/cm^2$ | 0.357 | 0.378 | 0.336 | 0.399 |
| Rockwell Hardness, R Scale | 122 | 122 | 122 | — |

*Parts per 100 parts PET

Examples 30—52

The various PET compositions of Examples 30—52 were prepared as set forth in Examples 1—29. The PET, glass and sodium stearate used in these Examples are identified in Examples 1—29. The epoxidized plasticizers used in Examples 30—52 are identified as follows:

Epoxidized Soybean Oil:

from Argus Chemical Corp. under the designation Drapex 6.8, which is an essentially fully epoxidized soybean oil containing 7 weight percent of oxirane oxygen; and

Epoxidized Linseed Oil:

from Argus Chemical Corp. under the designation Drapex 10.4.

Tables VI and VII (Examples 30—38 and 39—45, respectively) report the observations noted of the moldability of varous compositions of this invention. The observation of compositions not utilizing the combination of epoxidized plasticizer and adjuvants of this invention are shown in Table VIII (Comparative Examples 46—52 of which 51 and 52 correspond to Comparative Examples 28 and 27 respectively—see Table IV). The moldability ratings have the same definitions as those set forth in Examples 1—29.

In all of these Examples the mold temperature was kept around 200°F (93°C).

TABLE VI
Compositions of this invention and their moldability

| | Examples | | | | | | | | |
|---|---|---|---|---|---|---|---|---|---|
| | 30 | 31 | 32 | 33 | 34 | 35 | 36 | 37 | 38 |
| Composition PET Resin, parts | 100 | 100 | 100 | 100 | 100 | 100 | 100 | 100 | 100 |
| Glass Fiber, phr* | 43 | 43 | 43 | 43 | 43 | 43 | 43 | 43 | 43 |
| Drapex 6.8, phr* | 6 | 6 | 3 | 4 | 5 | 6 | 8.6 | 5 | 5 |
| Talc, phr* | 2 | 1 | 1 | 1 | 1 | 1 | 1.4 | — | — |
| Mica, phr* | — | — | — | — | — | — | — | 1 | — |
| $TiO_2$, phr* | — | — | — | — | — | — | — | — | 1 |
| Moldability | Good | Excellent | Good | Good | Good | Good | Excellent | Fair** | Poor |

* Parts per 100 parts by weight of PET resin
** Amorphous skin

TABLE VII
Compositions of this invention and their moldability

| | Examples | | | | | | |
|---|---|---|---|---|---|---|---|
| | 39 | 40 | 41 | 42 | 43 | 44 | 45 |
| Composition PET Resin, parts | 100 | 100 | 100 | 100 | 100 | 100 | 100 |
| Glass Fiber, phr* | 43 | 43 | 43 | 43 | 43 | 43 | 43 |
| Drapex 6.8, phr* | 3 | 3 | 3 | 3 | 4.3 | — | 3 |
| Drapex 10.4, phr* | — | — | — | — | — | 3 | — |
| Sodium Stearate, phr* | 0.5 | 0.5 | 0.5 | 0.5 | 0.7 | 0.5 | — |
| Sodium Methacrylate, phr* | — | — | — | — | — | — | 0.5 |
| Moldability | Excellent | Good | Good | Good | Excellent | Excellent | Poor |

* Parts per 100 parts by weight of PET resin

TABLE VIII
Compositions not of this invention and their moldability

| | Comparative Examples | | | | | | |
|---|---|---|---|---|---|---|---|
| | 46 | 47 | 48 | 49 | 50 | 51 | 52 |
| Composition | | | | | | | |
| PET Resin, parts | 100 | 100 | 100 | 100 | 100 | 100 | 100 |
| Glass Fiber, phr* | 43 | 43 | 43 | 43 | 43 | 43 | 43 |
| Drapex 6.8, phr* | 6 | 3.0 | 8.6 | — | — | — | — |
| Talc, phr* | — | — | — | 2 | 2.8 | — | — |
| Soxium Stearate, phr* | — | — | — | — | — | 0.5 | — |
| Moldability | Non-moldable | Non-moldable | Non-moldable | Non-moldable | Non-moldable | Non-moldable | Non-moldable |

* Parts per 100 parts of PET

As can be seen from Table VIII, the absence of either the epoxidized plasticizer or the synergistic adjuvant results in a non-moldable composition under the same molding conditions.

The data shown in Table IX illustrate the good balance of physical properties exhibited by articles injection molded from compositions of this invention at mold temperatures of about 93°C. The test specimens were subjected to the ASTM procedures set forth in Examples 1—29.

TABLE IX
Compositions of this invention and their physical properties

| | Examples | | | | |
|---|---|---|---|---|---|
| | 36 | 39 | 41 | 42 | 43 |
| Composition | | | | | |
| PET Resin, parts | 100 | 100 | 100 | 100 | 100 |
| Glass Fiber, phr* | 43 | 43 | 43 | 43 | 43 |
| Drapex 6.8, phr* | 8.6 | 3 | 3 | 3 | 4.3 |
| Sodium Stearate, phr* | — | 0.5 | 0.5 | 0.5 | 0.7 |
| Talc, phr* | 1.4 | — | — | — | — |
| Properties | | | | | |
| Tensile Yield, bar | 1096.3 | 1296.2 | 1282.4 | 1275.5 | 1296.2 |
| Tensile Elastic Modulus, kbar | 95.15 | 91.01 | 97.90 | 95.15 | 91.01 |
| Elongation, % | — | 10.9 | 8.3 | <10 | — |
| Flexural strength, bar | 1820.2 | 2220.1 | 2068.4 | 2096.0 | 2220.1 |
| Flexural Elastic Modulus, kbar | 88.44 | 99.28 | 91.70 | 97.22 | 99.28 |
| Izod Impact, 6.35 mm bar, J/cm$^2$ | 0.273 | 0.336 | 0.336 | 0.357 | 0.336 |
| Rockwell Hardness, R Scale | — | 119 | 121 | 120 | — |

*Parts per 100 parts PET

Examples 53—57

The various PET compositions of Examples 53—57 were prepared as set forth in Examples 1—29.

The PET and sodium stearate used in these Examples are identified in Examples 1—29. The epoxidized plasticizers and glass used in Examples 53—57 are identified as follows:

Octyl Epoxy Soyate:
from Viking Chemical Company under the product designation Vikoflex 7080;

Octyl Epoxy Linseedate:
from Viking Chemical Company under the product designation Vikoflex 9080;

Octyl Epoxy Tallate:
from Argus Chemical Corp. under the product designation Drapex 4.4; and

Glass Fiber Strands:
from Owens-Corning Fiberglas, Corp., designated Owens-Corning Fiberglas 419AA (4.762 mm chopped strands).

Table X reports moldability of various compositions of this invention (Examples 53—55) and of compositions not of this invention (Comparative Examples 56 and 57 which correspond to Comparative Examples 28 and 27 respectively—see Table IV) in terms of observation and "the number of sticks" (i.e., the number of times the molding cycle had to be stopped and a molded specimen physically removed from the mold) in relation to the "number of shots" (i.e., the number of injections) that were made with the given PET composition. In severe cases, removal of a stuck part required prying or chiseling. Where the observation is shown as "Excellent", the molded article freely fell from the mold upon mold opening. A rating of "Non-moldable" indicates that the article stuck to the sprue side of the mold and that the molding

cycle had to be stopped so that the molded article could be removed from the mold by chiseling, prying, etc.

In all the Examples the mold temperature was kept around 200°F (93°C).

TABLE X
Various PET compositions and their moldability

| | Examples | | | Comparative Examples | |
|---|---|---|---|---|---|
| | 53 | 54 | 55 | 56 | 57 |
| Composition | | | | | |
| Polyethylene terephthalate, parts | 100 | 100 | 100 | 100 | 100 |
| Glass Fiber, phr* | 43 | 43 | 43 | 43 | 43 |
| Octyl Epoxy Linseedate[a], phr* | 3.0 | — | — | — | — |
| Octyl Epoxy Soyate[b], phr* | — | 3.0 | — | — | — |
| Octyl Epoxy Tallate[c], phr* | — | — | 3.0 | — | — |
| Sodium Stearate, phr* | 0.5 | 0.5 | 0.5 | 0.5 | — |
| Zinc Sulfide[d], phr* | — | — | 2.0 | — | — |
| Moldability | | | | | |
| Observation | Excellent | Excellent | — | Non-moldable | Non-moldable |
| Number of sticks/Number of shots | 0/10** | 0/10** | 0/15 | 10/10‡ | 10/10‡ |

* Parts per 100 parts PET
** Estimate—number of shots were not recorded
‡ Estimate—number of shots were not recorded; however, in each run the molded specimen had to be physically removed from the mold
[a] Vikoflex 9080 from Viking Chemical Company
[b] Vikoflex 7080 from Viking Chemical Company
[c] Drapex 4.4 from Argus Chemical Corporation
[d] Zinc Sulfide—colorizing agent

As can be seen from Table X, Comparative Examples 56 and 57, the absence of the epoxidized plasticizer or the absence of both the epoxidized plasticizer and the adjuvant results in a non-moldable composition under the same molding conditions.

The data shown in Table XI illustrate the good balance of physical properties exhibited by articles injection molded from compositions of this invention at mold temperatures of about 200°F (93°C). The test specimens were subjected to the ASTM procedures set forth in Examples 1—29.

TABLE XI
Compositions of this invention and their physical properties

| | Examples | | |
|---|---|---|---|
| | 53 | 54 | 55 |
| **Composition** | | | |
| Polyethylene Terephthalate, parts | 100 | 100 | 100 |
| Glass Fiber, phr* | 43 | 43 | 43 |
| Octyl Epoxy Linseedate[a], phr* | 3.0 | — | — |
| Octyl Epoxy Soyate[b], phr* | — | 3.0 | — |
| Octyl Epoxy Tallate[c], phr* | — | — | 3.0 |
| Sodium Stearate, phr* | 0.5 | 0.5 | 0.5 |
| Zinc Sulfide[d], phr* | — | — | 2.0 |
| **Properties** | | | |
| Specific Gravity | 1.583 | 1.587 | 1.578 |
| Tensile Yield, bar | 1372.0 | 1282.4 | 1275.5 |
| Tensile Elastic Modulus, kbar | 91.70 | 97.22 | 96.87 |
| Elongation at yield, % | <10 | <10 | — |
| Flexural Strength, bar | 2206.3 | 1965.0 | 1909.8 |
| Flexural Elastic Modulus, kbar | 99.28 | 97.97 | 93.77 |
| Izod Impact, 6.35 mm bar, $J/cm^2$ | 0.399 | 0.42 | 0.294 |
| Izod Impact, 3.175 mm bar, $J/cm^2$ | 0.357 | 0.357 | — |
| Heat Deflection Temperature @18.2 bar, °C | 239 | 241 | 237 |
| Heat Deflection Temperature @4.55 bar, °C | 250 | 249 | — |
| Rockwell Hardness, R Scale | 123 | 123 | — |

* Parts per 100 parts PET
[a] Vikoflex 9080 from Viking Chemical Company
[b] Vikoflex 7080 from Viking Chemical Company
[c] Drapex 4.4 from Argus Chemical Corporation
[d] Zinc Sulfide—colorizing agent

**Claims**

1. A thermoplastic composition which is injection moldable comprising an intimate mixture of:
(a) a polyethylene terephthalate, and
(b) an epoxidized plasticizer having an oxirane oxygen content within the range of 0.5 and 12.0 percent weight selected from;

(i) a hydrocarbyl ester of a mono epoxidized alkenoic acid having from 12 to 50 carbon atoms,
(ii) an epoxidized unsaturated triglyceride containing at least one epoxide group, and
(iii) an epoxy ester mixture having at least one monoepoxy aliphatic monocarboxylic acid ester and at least one diepoxy aliphatic monocarboxylic acid ester having from 7 to 50 carbon atoms in each ester molecule; and

(c) a nucleating agent cooperative with the epoxidized plasticizer of (b) to increase the releasability of

articles molded from said composition over the releasability of articles molded from a composition comprising only (a) and (b) or (a) and (c) when using mold temperatures of at least as low as 93°C.

2. The composition of Claim 1 wherein said epoxidized plasticizer has an oxirane oxygen content within the range of 3.0% to 10.0% by weight.

3. The composition of Claim 1 wherein said epoxidized plasticizer is said hydrocarbyl ester of a mono epoxidized alkenoic acid having from 12 to 50 carbon atoms of subparagraph (i).

4. The composition of Claim 3 wherein said hydrocarbyl ester is an alkyl ester in which the alkyl radical has from 7 to 36 carbon atoms.

5. The composition of Claim 4 wherein the ester is an octyl ester.

6. The composition of Claim 1 wherein said epoxidized plasticizer is epoxidized octyl oleate.

7. The composition of Claim 1 wherein said epoxidized plasticizer is said epoxidized unsaturated triglyceride containing at least one epoxide group of subparagraph (ii).

8. The composition of Claim 7 wherein said epoxidized triglyceride is epoxidized linseed oil.

9. The composition of Claim 7 wherein said epoxidized triglyceride is epoxidized soybean oil.

10. The composition of Claim 1 wherein said epoxidized plasticizer is said epoxy aliphatic monocarboxylic acid ester and at least one diepoxy aliphatic monocarboxylic acid ester having from 7 to 50 carbon atoms in each ester molecule of subparagraph (iii).

11. The composition of Claim 10 wherein said epoxy ester mixture is derived from at least one alcohol having from one to 20 carbon atoms and from at least two different aliphatic monocarboxylic acids having from 6 to 30 carbon atoms.

12. The composition of Claim 10 wherein said epoxy ester mixture is derived from at least two different alcohols having from one to 20 carbon atoms and from at least one aliphatic monocarboxylic acid having from about 6 to 30 carbon atoms.

13. The composition of Claim 10 wherein said epoxy ester mixture is derived from vegetable oils or vegetable fats.

14. The composition of Claim 10 wherein said epoxy ester mixture is derived from soybean oil or linseed oil.

15. The composition of Claim 1 wherein said nucleating agent is an alkali metal monocarboxylic acid salt.

16. The composition of Claim 1 wherein said nucleating agent is (a) an alkali metal monocarboxylic acid salt selected from sodium stearate, sodium acetate, sodium propionate, sodium acrylate, or sodium benzoate, (b) an intimate mixture comprising the sodium salts of tallow fatty acids and coconut fatty acids, or (c) sodium carbonate, talc, mica, boron nitride, *p*-hydroxybenzoic acid, zinc stearate or an ionomer resin containing sodium ions.

17. The composition of Claim 1 wherein said epoxidized plasticizer is present in an amount within the range of from 0.5 to 12 parts per hundred parts of said polyethylene terephthalate and said nucleating agent is present within the range of 0.05 to 5 parts per hundred parts of said polyethylene terephthalate.

18. The composition of Claim 1 wherein said composition additionally contains a reinforcing filler which comprises glass fibers.

19. A thermoplastic composition which is injection-moldable at a relatively low mold temperature, said composition characterized by an intimate admixture of:

(a) a polyethylene terephthalate having an intrinsic viscosity of between 0.4 and 0.9, as measured at 25°C in a solvent consisting of 60% by weight of phenol and 40% by weight of tetrachloroethane; and

(b) from 30 to 90 parts by weight of glass fiber reinforcing filler per 100 parts by weight of the polyethylene terephthalate; and

(c) an epoxidized plasticizer; and

(d) a nucleating agent cooperative with the epoxidized plasticizer of (c) to increase the releasability of articles molded from said composition over the releasability of articles molded from a composition comprising only (a) and (c) or (a) and (d) when using mold temperatures of 93°C or below which nucleating agent is selected from metal salts of carboxylic acids, talc, mica, p-hydroxybenzoic acid, sodium benzoate, boron nitride.

20. The composition of Claim 19 wherein said epoxidized plasticizer is epoxidized octyl oleate, epoxidized soybean oil, epoxidized linseed oil, octyl epoxy linseedate, octyl epoxy soyate or octyl epoxy tallate and said nucleating agent is a sodium salt of a monocarboxylic acid.

21. The composition of Claim 20 wherein said nucleating agent is sodium stearate.

**Patentansprüche**

1. Thermoplastische spritzgießbare Zusammensetzung, enthaltend eine innige Mischung aus:

a) einem Polyethylenterephthalat, und

b) einem epoxidierten Plastifizierungsmittel mit einem Oxiran-Sauerstoff-Gehalt im Bereich von 0,5 bis 12 Gew.-% ausgewält aus:

(i) einem Hydrocarbylester einer monoepoxidierten Alkensäure mit 12 bis 50 Kohlenstoffatomen,
(ii) einem epoxidierten ungesättigten Triglycerid, das mindestens eine Epoxidgruppe enthält, und

(iii) einer Epoxiestermischung, die zumindest einen monoepoxi-aliphatischen Monocarbonsäureester und zumindest einen diepoxi-aliphatischen Monocarbonsäureester enthält, wobei jedes Estermolekül 7 bis 50 Kohlenstoffatome aufweist; und

c) einem mit dem epoxidierten Plastifizierungsmittel aus (b) zusammenwirkenden Nukleierungsmittel, um die Ablösbarkeit der aus dieser Zusammensetzung spritzgegossenen Gegenstände gegenüber der Ablösbarkeit von Gegenständen, die aus einer Zusammensetzung, die nur (a) und (b) oder (a) und (c) enthält, zu erhöhen, wenn Spritzgießtemperaturen von 93°C oder darunter verwendet werden, wobei das Nukleierungsmittel aus Metallsalzen von Carbonsäuren, Natriumcarbonat, Talg, Glimmer, Parahydroxybenzoesäure, Natriumbenzoat und Bornitrid ausgewählt ist.

2. Zusammensetzung nach Anspruch 1, worin das epoxidierte Plastifizierungsmittel einen Oxiran-Sauerstoff-Gehalt im Bereich von 3,0 bis 10,0 Gew.-% aufweist.

3. Zusammensetzung nach Anspruch 1, worin das epoxidierte Plastifizierungsmittel der Hydrocarbyleser einer monoepoxidierten Alkensäure mit 12 bis 50 Kohlenstoffatomen gemäß Subparagraph (i) ist.

4. Zusammensetzung nach Anspruch 3, worin der Hydrocarbylester ein Alkylester ist, worin der Alkylrest 7 bis 36 Kohlenstoffatome aufweist.

5. Zusammensetzung nach Anspruch 4, worin der Ester ein Octylester ist.

6. Zusammensetzung nach Anspruch 1, worin das epoxidierte Plastifizierungsmittel epoxidiertes Octyloleat ist.

7. Zusammensetzung nach Anspruch 1, worin das epoxidierte Plastifizierungsmittel das epoxidierte ungesättigte Triglycerid enthaltend mindestens eine Epoxidgruppe gemäß Subparagraph (ii) ist.

8. Zusammensetzung nach Anspruch 7, worin das epoxidierte Triglycerid epoxidiertes Leinöl ist.

9. Zusammensetzung nach Anspruch 7, worin das epoxidierte Triglycerid epoxidiertes Sojaöl ist.

10. Zusammensetzung nach Anspruch 1, worin das epoxidierte Plastifizierungsmittel ein epoxialiphatischer Monocarbonsäureester und zumindest ein diepoxi-aliphatischer Monocarbonsäureester mit 7 bis 50 Kohlenstoffatomen in jedem Estermolekül gemäß Subparagraph (iii) ist.

11. Zusammensetzung nach Anspruch 10, worin die Epoxiestermischung von mindestens einem Alkohol mit 1 bis 20 Kohlenstoffatomen und mindestens zwei verschiedenen aliphatischen Monocarbonsäuren mit 6 bis 30 Kohlenstoffatomen abgeleitet ist.

12. Zusammensetzung nach Anspruch 10, worin die Epoxiestermischung von mindestens zwei verschiedenen Alkoholen mit 1 bis 20 Kohlenstoffatomen und mindestens einer aliphatischen Monocarbonsäure mit 6 bis 30 Kohlenstoffatomen abgeleitet ist.

13. Zusammensetzung nach Anspruch 10, worin die Epoxiestermischung von pflanzlichen Ölen oder pflanzlichen Fetten abgeleitet ist.

14. Zusammensetzung nach Anspruch 10, worin die Epoxiestermischung von Sojaöl oder Leinöl abgeleitet ist.

15. Zusammensetzung nach Anspruch 1, worin das Nukleierungsmittel ein Alkalimetallsalz einer Monocarbonsäure ist.

16. Zusammensetzung nach Anspruch 1, worin das Nukleierungsmittel

a) ein Alkalimetallsalz einer Monocarbonsäure, ausgewählt aus Natriumstearat, Natriumacetat, Natriumpropionat, Natriumacrylat oder Natriumbenzoat, ist;

b) eine innige Mischung, enthaltend die Natriumsalze von Talgfettsäuren und Kokosnußfettsäuren, oder

c) Natriumcarbonat, Talg, Glimmer, Bornitrid, Parahydroxybenzoesäure, Zinkstearat oder ein Ionomerharz, enthaltend Natriumionen, ist.

17. Zusammensetzung nach Anspruch 1, worin das epoxidierte Plastifizierungsmittel in einer Menge im Bereich von 0,5 bis 12 Teile pro 100 Teile Polyethylenterephthalat und das Nukleierungsmittel im Bereich von 0,05 bis 5 Teile pro 100 Teile Polyethylenterephthalat vorhanden ist.

18. Zusammensetzung nach Anspruch 1, worin die Zusammensetzung zusätzlich einen verstärkenden Füllstoff aus Glasfasern enthält.

19. Thermoplastische Zusammensetzung, die bei relativ niedriger Formtemperatur spritzgießbar ist, wobei die Zusammensetzung durch eine innige Mischung der folgenden Bestandteile gekennzeichnet ist:

a) einem Polyethylenterephthalat mit einer inneren Viskosität zwischen 0,4 und 0,9, gemessen bei 25°C in einem Lösungsmittel, das aus 60 Gew.-% Phenol und 40 Gew.-% Tetrachlorethan besteht; und

b) 30 bis 90 Gew.- Teile eines Glasfaserverstärkungs-Füllstoffs pro 100 Gew.- Teile Polyethyleneterephthalat; und

c) einem epoxidiertem Plastifizierungsmittel; und

d) einem Nukleierungsmittel, das mit dem epoxidierten Plastifizierungsmittel aus (c) die Ablösbarkeit der aus der Zusammensetzung spritzgegossenen Gegenstände gegenüber der Ablösbarkeit von Gegenständen, die aus einer Zusammensetzung, die nur (a) und (c) oder (a) und (d) enthält, erhöht, wenn Formtemperaturen von 93°C oder darunter verwendet werden, wobei das Nukleierungsmittel aus Metallsalzen von Carbonsäuren, Talg, Glimmer, Parahydroxybenzoesäure, Natriumbenzoat und Bornitrid ausgewählt ist.

20. Zusammensetzung nach Anspruch 19, worin das epoxidierte Plastifizierungsmittel epoxidiertes

Octyloleat, epoxidiertes Sojaöl, epoxidiertes Leinöl, Octylepoxilinolat, Octylepoxisoyat oder Octylepoxitallat und das Nukleierungsmittel ein Natriumsalz einer Monocarbonsäure ist.

21. Zusammensetzung nach Anspruch 20, worin das Nukleierungsmittel Natriumstearat ist.

**Revendications**

1. Composition thermoplastique moulable par injection, qui comprend un mélange intime de:

(a) un téréphtalate de polyéthylène, et

(b) un plastifiant époxydé ayant une teneur en oxygène d'oxirane, comprise entre 0,5 et 12,0 pourcent en poids, choisi entre:

(i) un ester d'hydrocarbyle d'un acide alcénoîque monoépoxydé ayant 12 à 50 atomes de carbone,
(ii) un triglycéride insaturé époxydé contenant au moins un groupe époxyde, et
(iii) un mélange d'époxy-esters contenant au moins un monoépoxy-ester d'acide aliphatique monocarboxylique et au moins un diépoxy-ester d'acide aliphatique monocarboxylique, ayant 7 à 50 atomes de carbone dans chaque molécule d'ester; et

(c) un agent de nucléation coopérant avec le plastifiant époxydé de (b) pour accroître l'aptitude au démoulage d'articles moulés à partir de ladite composition, par rapport à l'aptitude au démoulage d'articles moulés à partir d'une composition comprenant seulement (a) et (b) ou (a) et (c) lors de l'utilisation de températures de moulage inférieures ou égales à 93°C, agent de nucléation qui est choisi entre des sels métalliques d'acides carboxyliques, le carbonate de sodium, le talc, le mica, l'acide parahydroxybenzoîque, le benzoate de sodium et le nitrure de bore.

2. Composition suivant la revendication 1, dans laquelle le plastifiant époxydé possède une teneur en oxygène d'oxirane comprise entre 3,0% et 10,0% en poids.

3. Composition suivant la revendication 1, dans laquelle le plastifiant époxydé est l'ester d'hydrocarbyle d'un acide alcénoîque monoépoxydé ayant 12 à 50 atomes de carbone du sous-paragraphe (i).

4. Composition suivant la revendication 3, dans laquelle l'ester d'hydrocarbyle est un ester alkylique dans lequel le radical alkyle possède 7 à 36 atomes de carbone.

5. Composition suivant la revendication 4, dans laquelle l'ester est un ester octylique.

6. Composition suivant la revendication 1, dans laquelle le plastifiant époxydé est l'oléate d'octyle époxydée.

7. Composition suivant la revendication 1, dans laquelle le plastifiant époxydé est le triglycéride insaturé époxydé contenant au moins un groupe époxyde du sous-paragraphe (ii).

8. Composition suivant la revendication 7, dans laquelle le triglycéride époxydé est l'huile de lin époxydée.

9. Composition suivant la revendication 7, dans laquelle le triglycéride époxydé est l'huile de soja époxydée.

10. Composition suivant la revendication 1, dans laquelle le plastifiant époxydé comprend l'époxy-ester d'acide aliphatique monocarboxylique et au moins un diépoxy-ester d'acide aliphatique monocarboxylique ayant 7 à 50 atomes de carbone dans chaque molécule d'ester du sous-paragraphe (iii).

11. Composition suivant la revendication 10, dans laquelle le mélange d'époxy-esters est dérivée d'au moins un alcool ayant un à 20 atomes de carbone et d'au moins deux acides aliphatiques monocarboxyliques différents ayant 6 à 30 atomes de carbone.

12. Composition suivant la revendication 10, dans laquelle le mélange d'époxy-esters est dérivé d'au moins deux alcools différents ayant un à 20 atomes de carbone et d'au moins un acide aliphatique monocarboxylique ayant environ 6 à 30 atomes de carbone.

13. Composition suivant la revendication 10, dans laquelle le mélange d'époxy-esters est dérivé d'huiles végétales ou de graisses végétales.

14. Composition suivant la revendication 10, dans laquelle le mélange d'époxy-esters est dérivé d'huile de soja ou d'huile de lin.

15. Composition suivant la revendication 1, dans laquelle l'agent de nucléation est un sel de métal alcalin d'un acide monocarboxylique.

16. Composition suivant la revendication 1, dans laquelle l'agent de nucléation est (a) un sel de métal alcalin d'un acide monocarboxylique, choisi entre le stéarate de sodium, l'acétate de sodium, le propionate de sodium, l'acrylate de sodium ou le benzoate de sodium, (b) un mélange intime comprenant les sels de sodium d'acides gras du suif et d'acides gras de coprah, ou (c) le carbonate de sodium, le talc, le mica, le nitrure de bore, l'acide parahydroxybenzoîque, le stéarate de zinc ou une résine ionomère contenant des ions sodium.

17. Composition suivant la revendication 1, dans laquelle le plastifiant époxydé est présent en une quantité comprise entre 0,5 et 12 parties pour cent parties du téréphtalate de polyéthylène, et l'agent de nucléation est présent en une quantité comprise entre 0,05 et 5 parties pour cent parties du téréphtalate de polyéthylène.

18. Composition suivant la revendication 1, comprenant en outre une charge de renforcement consistant en fibres de verre.

19. Composition thermoplastique moulable par injection à une température de moulage relativement basse, caractérisé en ce qu'elle comprend un mélange intime de:

(a) un téréphtalate de polyéthylène ayant une viscosité intrinsèque comprise entre 0,4 et 0,9, mesurée à 25°C dans un solvant comprenant 60% en poids de phénol et 40% en poids de tétrachloréthane; et

(b) 30 à 90 parties en poids de charge de renforcement du type fibre de verre pour 100 parties en poids du téréphtalate de polyéthylène; et

(c) un plastifiant époxydé; et

(d) un agent de nucléation coopérant avec le plastifiant époxydé de (c) pour accroître l'aptitude au démoulage d'articles moulés à partir de ladite composition par rapport à l'aptitude au démoulage d'articles moulés à partir d'une composition comprenant seulement (a) et (c) ou (a) et (d) lors de l'utilisation de températures de moulage inférieures ou égales à 93°C, agent de nucléation qui est choisi entre des sels métalliques d'acides carboxyliques, le talc, le mica, l'acide parahydroxybenzoïque, le benzoate de sodium et le nitrure de bore.

20. Composition suivant la revendication 19, dans laquelle le plastifiant époxydé est l'oléate d'octyle époxydé, l'huile de soja époxydée, l'huile de lin époxydée, l'époxy-ester octylique d'huile de lin, l'époxy-ester octylique d'huile de soja ou l'époxy-ester octylique du tall-oil, et l'agent de nucléation est un sel de sodium d'un acide monocarboxylique.

21. Composition suivant la revendication 20, dans laquelle l'agent de nucléation est le stéarate de sodium.

Figure